# EUROPEAN PATENT APPLICATION

(11) **EP 3 226 123 A1**
(43) Date of publication of application: **04.10.2017**
(21) Application number: 16165399.3
(22) Date of filing: 14.04.2016
(51) Int. Cl.: G06F 9/44, G06F 17/20, G06Q 50/12

(54) **MENU GENERATION SYSTEM**

(30) Priority: 29.03.2016 JP 2016066905
(71) Applicant: Gurunavi, Inc., Tokyo 100-0006 (JP)
(72) Inventor: KUBO, Seiichiro, Chiyoda-ku, Tokyo 100-0006 (JP); CHIBA, Makito, Chiyoda-ku, Tokyo 100-0006 (JP); SUMIDA, Hiroto, Chiyoda-ku, Tokyo 100-0006 (JP); NAKAYAMA, Koichiro, Chiyoda-ku, Tokyo 100-0006 (JP)
(74) Representative: D Young & Co LLP

(57) **Abstract**

In a menu generation system 1, which is a menu generation system that generates a menu of a restaurant in multiple languages, input of a menu item name is received (S200) and input of a selected menu item property in a first language from among menu item properties is received (S210). Then, on the basis of a correspondence relation between the menu item property in the first language and the menu item property in a second language, which is stored in a corresponding foreign-language term storage unit, the received menu item property in the first language is converted to the menu item property in the second language (S220). After login operation for identifying a restaurant is received, the received menu item name and the converted menu item property in the second language are stored as menu item information for the restaurant identified according to the login operation (S230).

## Description

### BACKGROUND OF THE INVENTION

### 1. Field of the Invention

The invention relates to a menu generation system that generates a menu to be presented to a foreign guest at a restaurant.

### 2. Description of Related Art

In recent years, foreigners who visit Japan have been increasing, and quite a lot of foreigners come to restaurants. Foreigners who understand Japanese order at restaurants without any trouble; however, for foreigners who do not understand Japanese or little understand Japanese, it is not easy to order. Some restaurants have a menu in a foreign language, such as English, for foreigners.

Japanese Patent Application Publication No. 10-49185 (JP 10-49185 A), Japanese Patent Application Publication No. 2002-297733 (JP 2002-297733 A), and Japanese Patent Application Publication No. 2013-175062 (JP 2013-175062 A) describe systems that generate a menu, or the like, in a foreign language at each restaurant.

### SUMMARY OF THE INVENTION

JP 10-49185 A describes the invention of a menu item explanation system that reproduces detailed explanation information of items listed in a menu by foreign-language voice. If this system is used, the foreign-language voice echoes therearound, with the result of an inconvenience of guests sitting therearound. In addition, each restaurant is required to prepare detailed explanation information; however, there is often no staff who has a good command of a foreign language at a restaurant. Therefore, it can be difficult to prepare explanations of menu items.

JP 2002-297733 A describes the invention in which a menu item explanation consisting of Japanese and English is prepared for each menu item, and is stored in advance in a handy terminal that is used by a waitperson and when the waitperson serves a foreign guest, the waitperson displays the English menu item explanation on the handy terminal through predetermined operation and then shows the English menu item explanation to the foreign guest. Even in this case, each restaurant is required to enter menu item explanations into the handy terminal in advance as in the case of JP 10-49185 A; however, there is often no staff who has a good command of a foreign language at a restaurant. For this reason, it can be difficult to prepare menu item explanations.

JP 2013-175062 A describes the invention in which a foreign-language menu can be displayed on a ticket-vending machine intended for a restaurant by connecting a license kit to the ticket-vending machine. The license kit stores multilingual software. In this case, because the license kit is prepared by a ticket-vending machine maker, or the like, any staff is allowed to serve if there is no staff who has a good command of a foreign language at a restaurant. However, there are problems in that it is required to purchase the multilingual software and the license kit is not compatible with a restaurant-specific menu item, or the like.

In recent years, when foreigners look for restaurants, the foreigners not only use a guide book, or the like, but also often use a website that provides restaurant information on the Internet. The webpages of restaurants found from the website that provides restaurant information provide not only a shop name, a location, contact information, and the like, but also information about menu items, and the like. Then, if the webpages of restaurants provide a menu in a foreign language, an appeal to foreigners becomes effective. In addition, if such a menu is shown to a foreigner who actually comes to a restaurant, it is easy for the foreigner to order.

In order to achieve this object, it is conceivable to provide the webpages of restaurants in a foreign language by using an automatic translation site, or the like; however, there is an inconvenience in the accuracy, or the like, of automatic translations when Japanese menus are automatically translated. Particularly, in the case of menus at restaurants, some people have restrictions on ingredients, cooking styles, seasonings, or the like, because of, for example, the reason of religion, belief, health (such as allergy), or the like. For example, vegetarians avoid animal products.

A foreigner who has a good command of Japanese is able to ask a staff; otherwise, it is difficult to ask a staff. Even when menu item names, and the like, are translated by using an automatic translation site, or the like, unless ingredients, cooking styles, and the like, are accurately translated, the translated names, and the like, mislead foreigners, with the result of a possible trouble with a restaurant. In this way, when ingredients, cooking styles, and the like, are restricted, translations should be accurately expressed in order to make foreigners understand. Therefore, when the entire webpage including a menu is translated by using an automatic translation site, or the like, and then the translated information is merely provided, it is actually undesirable because there is room for misunderstanding.

In this way, if a foreign-language menu is provided, there is a problem in that menu item explanations about ingredients, cooking styles, and the like, which are subjects of taboos or restrictions due to religion, belief, health, or the like, should be accurately informed to foreigners who order. If menu items explanations are merely translated into foreign-language words, a staff who takes an order may erroneously understand the details of an order, so the staff is required to be able to accurately understand the details of an order made by a foreigner. On the other hand, because the menu of each restaurant represents the feature, and the like, of the restaurant, the viewpoint of appealing to guests by allowing an appeal unique to each restaurant is also required. That is, information should be accurately informed, while the flexibility of how to express the information should be maintained. Such mutually contradicting objects should be achieved. To achieve the above, translations made by a staff who has a good command of a foreign language are required as described above; however, not all the restaurants can provide such translations. Therefore, a method of generating a foreigner-oriented menu that is able to make foreigners accurately understand a menu item is desired with a simple method even when there is no staff who has a good command of a foreign language.

Considering the above task, the inventors invented a menu generation system that is able to make foreigners understand a menu item with a simple method even when there is no staff who has a good command of a foreign language.

A first aspect of the invention provides a menu generation system that generates a menu of a restaurant in multiple languages, the menu generation system including: a menu item information storage unit that stores menu item information; a menu item property master storage unit that stores menu item properties including at least any of a plurality of ingredients that are used in menu items, a plurality of seasonings that are used in the menu items and a plurality of cooking styles of the menu items; a menu item name input receiving unit that receives input of a menu item name; a menu item property processing unit that receives input of a selected menu item property in a first language from among the menu item properties stored in the menu item property master storage unit; a corresponding foreign-language term storage unit that stores a correspondence relation between the menu item properties in the first language and the menu item properties in a second language; an input information foreign-language word conversion unit that converts the received menu item property in the first language to the menu item property in the second language on the basis of the correspondence relation stored in the corresponding foreign-language term storage unit; a menu item information processing unit that after receiving login operation for identifying a restaurant, stores the received menu item name and the converted menu item property in the second language in the menu item information storage unit as menu item information for the restaurant identified according to the login operation; and a menu item information display unit that in response to a request to display a menu item from an information terminal, consults the menu item information storage unit and displays menu item information including the menu item name and the converted menu item property in the second language, on the information terminal.

The menu generation system may further include a menu item category input receiving unit that receives input of a selected menu item category. The menu item property master storage unit stores menu item categories associated with the menu item properties, in addition to the menu item properties. The menu item property processing unit extracts a menu item property corresponding to the received menu item category from the menu item property master storage unit, and receives the extracted menu item property as input of the menu item property in the first language.

The menu generation system may further include: a menu item introduction master storage unit that stores the menu item categories and menu item introductions in the first language in association with each other; and a menu item introduction processing unit that extracts a menu item introduction corresponding to the received menu item category from the menu item introduction master storage unit, and receives the extracted menu item introduction as the menu item introduction in the first language. The corresponding foreign-language term storage unit stores a correspondence relation between the menu item introductions in the first language and the menu item introductions in the second language, in addition to the menu item properties. The input information foreign-language word conversion unit converts the received menu item introduction in the first language to the menu item introduction in the second language on the basis of the correspondence relations stored in the corresponding foreign-language term storage unit. The menu item information processing unit stores in the menu item information storage unit as the menu item information, the converted menu item introduction in the second language as well as the menu item property.

The menu item information processing unit may be able to receive the login operation performed before or after the input of the menu item name and the menu item property.

The menu item property processing unit may cause the menu item properties stored in the menu item property master storage unit to be displayed in a form of a list according to pieces of identification information assigned in advance to the respective menu item properties and receive operation of selecting a menu item property from among the menu item properties displayed in the form of the list.

The menu item information storage unit may include a first menu item information storage unit to be consulted by the menu item information display unit and a second menu item information storage unit that temporarily stores the menu item information. After the menu item information is stored in the second menu item information storage unit, the menu item information processing unit may store the menu item information stored in the second menu item information storage unit, in the first menu item information storage unit in response to specific incorporation operation and delete the menu item information from the second menu item information storage unit.

If a menu item name that is the same as the received menu item name is already stored in the menu item information storage unit, the menu item information processing unit may issue a warning.

If specific confirmation operation is performed after the menu item information is displayed before the menu item information is stored in the menu item information storage unit, the menu item information processing unit may store the menu item information in the menu item information storage unit.

The menu item information processing unit may cause the input menu item name and the converted menu item property in the second language to be displayed in response to preview request operation on a screen to which the menu item name is input or a screen to which the selected menu item property is input.

If the menu item property received by the menu item property processing unit is not included in the menu item name or the converted menu item property in the second language is not included in the menu item name, the menu item information processing unit may issue a warning.

A second aspect of the invention provides a menu generation system that generates a menu of a restaurant in multiple languages, the menu generation system including: a menu item name input receiving unit that receives input of a menu item name in writing in a first language and the menu item name in writing that allows a foreigner to pronounce the menu item name in the first language or the menu item name in writing that can automatically be converted to the menu item name in writing that allows a foreigner to pronounce the menu item name in the first language; a menu item introduction processing unit that receives input of a menu item introduction in the first language; a menu item property processing unit that receives input of a menu item property selected from menu item properties including at least any one or more of an ingredient, a cooking style and a seasoning of each menu item; an automatic translation processing unit that translates the input menu item introduction received by the menu item introduction processing unit into a second language; a corresponding foreign-language term storage unit that stores a correspondence relation between the menu item properties in the first language and the menu item properties in the second language; an input information foreign-language word conversion unit that converts the menu item property in the first language to the menu item property in the second language on the basis of the correspondence relation stored in the corresponding foreign-language term storage unit; a menu item information storage unit that stores the menu item name, the menu item introduction and the menu item property as menu item information; and a menu item information display unit that in response to a request to display a menu item from a restaurant terminal used by a restaurant or a computer used by a guest, causes the menu item information stored in the menu item information storage unit to be displayed on the restaurant terminal or the computer used by the guest. The menu item information display unit causes the menu item name in writing that allows a foreigner to pronounce the menu item name in the first language, the received menu item introduction in the second language and the selected menu property in the second language to be displayed as the menu item information.

A third aspect of the invention provides a menu generation system that generates a menu of a restaurant in multiple languages, the menu generation system including: a menu item name input receiving unit that receives input of a menu item name in writing in a first language and the menu item name in writing that allows a foreigner to pronounce the menu item name in the first language or the menu item name in writing that can automatically be converted to the menu item name in writing that allows a foreigner to pronounce the menu item name in the first language; a menu item category input receiving unit that receives input of a selected menu item category; a menu item introduction master storage unit that stores menu item categories and template information of menu item introductions in association with each other; a menu item introduction processing unit that extracts template information of a menu item introduction corresponding to the selected menu item category from the menu item introduction master storage unit; a menu item property master storage unit that stores the menu item categories and template information of menu item properties including at least any one or more of an ingredient, a cooking style and a seasoning of each menu item, in association with each other; a menu item property processing unit that extracts template information of a menu item property corresponding to the selected menu item category from the menu item property master storage unit; an automatic translation processing unit that automatically translates a menu item introduction revised from a template by the menu item introduction processing unit into the second language; a corresponding foreign-language term storage unit that stores a correspondence relation between the template information of menu item introductions and the template information of menu item properties in the first language and the template information of menu item introductions and the template information of menu item properties in the second language; an input information foreign-language word conversion unit that converts a menu item property in the first language to the menu item property in the second language on the basis of the correspondence relation stored in the corresponding foreign-language term storage unit; and a menu item information display unit that in response to a request for displaying a menu item from a restaurant terminal used by a restaurant or a computer used by a guest, causes menu item information stored in a menu item information storage unit to be displayed on the restaurant terminal or the computer used by the guest. The menu item introduction processing unit receives a request for revision of template information of a menu item introduction from the restaurant terminal and receives input of the revision in the first language, the automatic translation processing unit executes automatic translation processing of the menu item introduction in the first language that has been revised by the menu item introduction processing unit into the second language, the menu item property processing unit, upon receipt of a request for revision of template information of a menu item property from the restaurant terminal, consults the menu item property master storage unit, extracts choices of the menu item property to be revised and receives input for the extracted choices from the restaurant terminal, and the menu item information display unit causes the menu item name in writing that allows a foreigner to pronounce the menu item name in the first language, the menu item introduction in the second language and the menu item properties in the second language to be displayed as the menu item information.

With the configuration according to these aspects of the invention, even when there is no staff who has a good command of a foreign language, it is possible to generate a foreign-language menu with a simple method. Particularly, in these aspects of the invention, the menu item name is shown in writing that allows pronunciation in the first language, such as Roman alphabet, and, when the menu item introduction is revised, the details of the revision is automatically translated into a menu item introduction in the foreign language, and a menu item property is received by making a selection and displayed in the corresponding foreign language.

It is a matter of an order with a foreign-language menu that a staff takes a wrong order. Particularly, if a menu item name is literally translated into a menu item name in a foreign language, a staff who takes an order is difficult to understand which menu item is an ordered menu item, so there is a concern about a wrong order. Therefore, a menu item name is shown in writing that allows even a foreigner to pronounce the menu item name in the first language, so even a foreigner is able to directly order through pronunciation in the first language. With the above configuration, it is possible to prevent a wrong order.

The menu item properties, such as an ingredient, a cooking style and a seasoning, are often subjects of taboos or restrictions due to religion, belief, health, or the like. Therefore, accuracy is important, and writing, or the like, that leads to ambiguity or misunderstanding should be avoided. If the menu item property is freely input at a restaurant and is automatically translated, there is a possibility that writing leads to ambiguity or misunderstanding. In addition, information of the menu item property is typical information. Therefore, in these aspects of the invention, the flexibility of a restaurant is intentionally limited for the menu item property, and the menu item property is input in an alternative form. Thus, writing that leads to ambiguity or misunderstanding is excluded. With this configuration, it is possible to avoid the situation that a foreigner orders an ingredient, or the like, which is a subject of taboos or restrictions due to the reason of religion, belief, health, or the like.

The menu item introduction describes how to eat the menu item, the feature of the menu item, and the like, so the menu item introduction is untypical information. Therefore, it is difficult to input the menu item introduction in an alternative form, and information regarding taboos or restrictions is described in the menu item explanation in the menu item property, so there is a low possibility of a negative effect even when free input of a menu item introduction is received and then an automatic translation of the menu item introduction is used. Therefore, free input of a menu item introduction in the first language is received as needed, and the menu item introduction is automatically translated. Thus, it is possible to provide untypical information to a foreigner as well.

In this way, in these aspects of the invention, the characteristics of the menu item name, menu item introduction and menu item property in a menu are considered, and then suitable processes for the menu item name, menu item introduction and menu item property are executed, thus making it possible to generate a foreign-language menu with an optimal method.

In the third aspect of the invention, by selecting a menu item category, it is possible to automatically set a menu item introduction, a menu item property, and the like, as default settings. This reduces a burden on input at a restaurant, and allows the restaurant to use details set in advance, so this also leads to prevention of erroneous input, or the like.

In the above invention, the menu generation system may be configured so as to further include a searching unit that receives a searching condition in a restaurant searching request from the restaurant terminal or the computer used by the guest, identifies a word in the second language, the word corresponding to the received searching condition, and sets the word as a second searching condition, and performs searching on the basis of the menu item information in the menu item information storage unit, and provides appropriate restaurant information to the restaurant terminal or the computer used by the guest.

With the configuration according to the invention when a foreigner uses a restaurant information providing site, the foreigner can search for an appropriate restaurant using a menu item name, a menu item introduction, a menu item property, or the like, as a searching condition.

In the above invention, the menu generation system may be configured so that the menu item information processing unit further receives input of information of a price of the menu item and the menu item information display unit further displays the price of the menu item.

In menus of restaurants, price information is important. Therefore, the configuration according to the invention enables display of a price of a menu item.

In the menu generation system according to the above invention, the menu item name input receiving unit may further receive input of menu item feature information indicating a feature of the menu item, and cause the menu item feature information to be stored in the menu item information storage unit as menu item information.

With the configuration according to the invention, menu item feature information indicating a feature of a menu item can be displayed, which can help a foreigner understand the menu item.

With the menu generation system according to the above invention, even when there is no staff who has a good command of a foreign language, it is possible to make a foreigner understand a menu item with a simple method. Because it is possible to accurately display an ingredient, a cooking style, and the like, on a menu, it is less likely to have a trouble with a guest. In addition, because a menu item name is displayed in writing that allows even a foreigner to pronounce the menu item name in the first language, there is a low possibility of making a wrong order.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a conceptual view that schematically shows an example of the system configuration of a menu generation system according to the invention;
FIG. 2 is a view that schematically shows an example of the hardware configuration of a computer that causes the menu generation system according to the invention to function;
FIG. 3 is a flowchart that schematically shows an example of the processing process of the menu generation system according to the invention;
FIG. 4 is a view that schematically shows an example of a management window;
FIG. 5 is a view that schematically shows an example of a state where a menu item name is input into the management window;
FIG. 6 is a view that schematically shows an example of a state where a menu item image is input into the management window;
FIG. 7 is a view that schematically shows an example of a state where a menu item category is input into the management window;
FIG. 8 is a view that schematically shows an example of a state where a menu item introduction and menu item properties are incorporated into the management window;
FIG. 9 is a view that schematically shows an example of a window in the case where a list of menu items is displayed by using the invention;
FIG. 10 is a view that schematically shows an example of a window in the case where the detailed information of a menu item is displayed by using the invention;
FIG. 11 is a conceptual view that schematically shows an example of the system configuration of a menu generation system according to a second embodiment;
FIG. 12 is a flowchart that schematically shows another example of the processing process of the menu generation system according to the invention;
FIG. 13 is a view that schematically shows an example of a state where a menu item name is input into the management window; and
FIG. 14 is a conceptual view that schematically shows an example of the system configuration of a menu generation system according to a third embodiment.

### DETAILED DESCRIPTION OF EMBODIMENTS

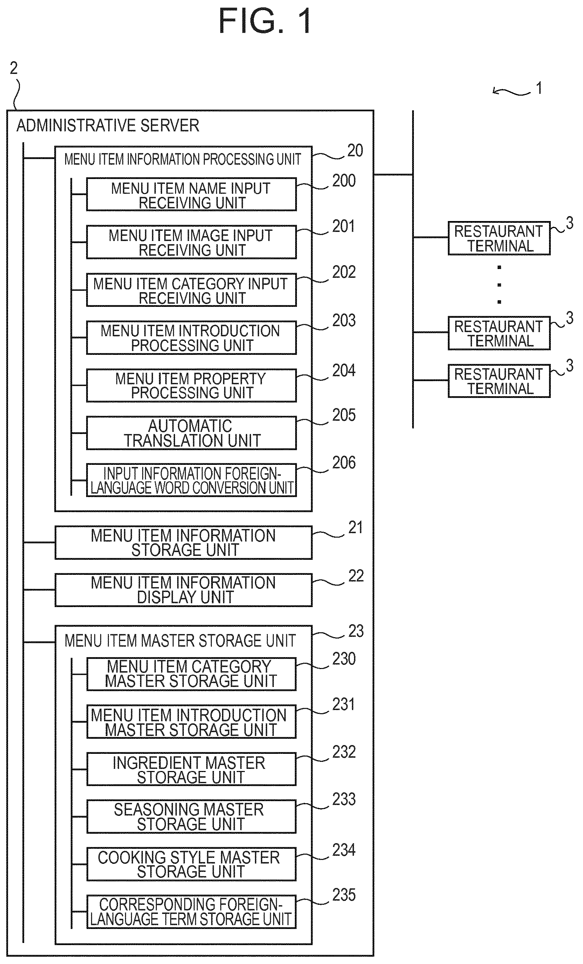

FIG. 1 shows an example of the overall system configuration of a menu generation system 1 according to the invention.

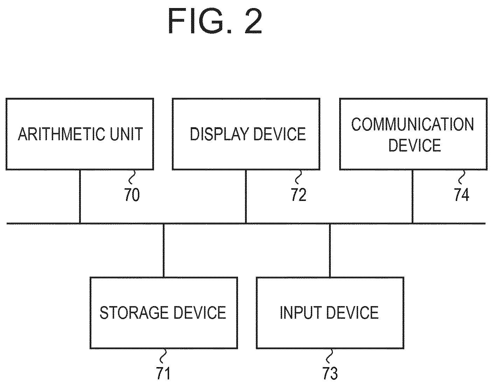

The menu generation system 1 is implemented by a computer including a server, and the like. FIG. 2 shows an example of the hardware configuration of the computer. The computer includes an arithmetic unit 70, a storage device 71, a display device 72, an input device 73, and a communication device 74. The arithmetic unit 70 is, for example, a CPU, and executes arithmetic processing in accordance with a program. The storage device 71 is, for example, a RAM or a hard disk, and stores information. The display device 72 is, for example, a display, and provides a display image. The input device 73 is, for example, a keyboard or a touch panel for input. The communication device 74 exchanges the results processed by the arithmetic unit 70 and information stored in the storage device 71 with another computer.

The respective means according to the invention may be just logically distinguished in function from one another, and may constitute the same area physically or practically. The functions of the menu generation system 1 according to the invention may be implemented by a single server or may be distributed to two or more servers. Part or all of the functions according to the invention may be implemented by a computer (including a portable communication terminal, such as a cellular phone) that is used by a user who searches for restaurants. Particularly, the processing of an automatic translation unit 205, an input information foreign-language word conversion unit 206, a menu item information display unit 22 (described later), and the like, may be executed by a user's computer. Thus, it is possible to reduce the processing load of an administrative server 2.

The administrative server 2 including the functions of the menu generation system 1 is able to exchange information with restaurant terminals 3 via a network, such as the Internet. The restaurant terminals 3 are computers that are respectively used at restaurants. Each of the restaurant terminals 3 just needs to be a computer, and includes not only a personal computer but also a portable communication terminal, and the like. The portable communication terminal includes a cellular phone including a smartphone, a PHS, a tablet computer, and the like. It is desirable that the menu generation system 1 be provided to restaurants that are franchisees of a company, or the like, that provides information about restaurants; however, the provider of the menu generation system 1 is not limited to the company, or the like.

The administrative server 2 in the menu generation system 1 includes a menu item information processing unit 20, a menu item information storage unit 21, the menu item information display unit 22 and a menu item master storage unit 23.

The menu item information processing unit 20 receives the input of information about a menu item that is provided at a restaurant. The menu item information processing unit 20 causes the menu item information storage unit 21 (described later) to store input information received in each of the processing units as menu item information. The menu item information processing unit 20 receives the input of a menu item name in writing that allows even a foreigner to pronounce the menu item name in a first language (a language (including an official language) in a country in which the menu generation system 1 is operating), for example, in Roman alphabet for Japanese. The menu item information processing unit 20 receives free input of a menu item introduction in the first language (for example, Japanese) as needed, and receives the input of each menu item property in an alternative form as needed. When it is desired to change a menu item introduction determined in advance, the menu item information processing unit 20 receives the input of the change and automatically translates the changed menu item introduction into a menu item introduction in a foreign language, and then automatically converts the menu item properties to corresponding foreign-language words. The information about a menu item includes information, such as a menu item name, a menu item introduction and menu item properties. The case where Japanese is the first language, which is the language in the country in which a service using the menu generation system 1 is rolled out, will be described. However, when the service is rolled out in another country, a language that is used in that country may be used as the first language. A second language means one or multiple languages (foreign languages for that country) other than the first language.

The menu item information processing unit 20 includes a menu item name input receiving unit 200, a menu item image input receiving unit 201, a menu item category input receiving unit 202, a menu item introduction processing unit 203, a menu item property processing unit 204 and the input information foreign-language word conversion unit 206.

The menu item name input receiving unit 200 receives the input of Japanese and katakana as a menu item name. The menu item name input receiving unit 200, based on the received menu item name in katakana, converts the menu item name to the menu item name in Roman alphabet that allows even a foreigner to pronounce the menu item name in Japanese. At this time, the menu item name input receiving unit 200 may also receive the input of menu item description information, such as an English word that describes the menu item, for example, tempura, sushi, beef steak, curry, or pizza. The menu item name input receiving unit 200 may not receive the input of katakana and then convert the katakana to Roman alphabet, but the menu item name input receiving unit 200 may receive the input of a Japanese menu item name in Roman alphabet. Any writing that allows pronunciation in Japanese (first language) other than the Roman alphabet may be employed.

The menu item image input receiving unit 201 receives the input of menu item image information.

The menu item category input receiving unit 202 receives the input of a selected category to which the menu item belongs. Categories to be selected are stored in a menu item category master storage unit 230 of the menu item master storage unit 23 (described later). The menu item category input receiving unit 202 displays choices by consulting the menu item category master storage unit 230 and then receives the input of a selected choice.

The menu item introduction processing unit 203 extracts the template information of a corresponding menu item introduction from a menu item introduction master storage unit 231 of the menu item master storage unit 23 (described later) on the basis of the information of the selected category received by the menu item category input receiving unit 202, and then displays the template information. When the menu item introduction processing unit 203 has received a selection to change the menu item introduction, the menu item introduction processing unit 203 receives the input of a sentence that introduces a menu item in Japanese. The sentence that introduces a menu item includes how to eat the menu item, the characteristic of the menu item, the appeal point of the menu item, and the like.

The menu item introduction processing unit 203 may receive the input of a menu item introduction from the beginning without using the template information.

The menu item property processing unit 204 extracts the pieces of template information of corresponding representative ingredient, cooking style and seasoning from an ingredient master storage unit 232, seasoning master storage unit 233 and cooking style master storage unit 234 of the menu item master storage unit 23 (described later) on the basis of the information of the selected category received by the menu item category input receiving unit 202, and then displays the pieces of template information. When the menu item property processing unit 204 has received a selection to change the menu item properties, the menu item property processing unit 204 receives the input of selected representative ingredient, cooking style, seasoning, and the like, of the menu item by consulting the ingredient master storage unit 232, the seasoning master storage unit 233, and the cooking style master storage unit 234. Menu item properties to be selected are respectively stored in the ingredient master storage unit 232, seasoning master storage unit 233, cooking style master storage unit 234, and the like, of the menu item master storage unit 23 (described later). The menu item property processing unit 204 receives the input of the selected menu item properties by consulting these master storage units and displaying choices. The menu item properties include a typical ingredient, a cooking style, a seasoning, and the like; however, the menu item properties are not limited to them. The menu item properties may be set as needed.

The menu item property processing unit 204 may receive the input of selected menu item properties by consulting the master storage units from the beginning without using the pieces of template information.

The representative ingredient includes, for example, the characteristic or kind of a fish that is used in a menu item, the characteristic or kind of a meat that is used in a menu item, the characteristic or kind of a vegetable that is used in a menu item, and the like. The cooking style includes information indicating how an ingredient is cooked, such as baking, boiling, steaming and frying. The seasoning includes a seasoning that is used in a menu item.

When the sentence that introduces a menu item is changed by the menu item introduction processing unit 203 and the input of the changed sentence has been received, the automatic translation unit 205 translates the changed sentence into a sentence in a foreign language with the use of a known translation processing function. Various translation functions may be used. Other than the function of translating a sentence on a website, a function specific to a translation associated with cooking may be used.

The input information foreign-language word conversion unit 206 automatically converts information received by the menu item category input receiving unit 202, the menu item introduction processing unit 203 and the menu item property processing unit 204 to corresponding foreign-language words on the basis of a correspondence table between words in Japanese, which is the first language, and words in at least one foreign language, which is the second language. The correspondence table is stored in a corresponding foreign-language term storage unit 236 of the menu item master storage unit 23 (described later).

The menu item information processing unit 20 may receive the input of the price information of a menu item.

The menu item information storage unit 21 stores pieces of information in the menu item information processing unit 20 as menu item information for each restaurant.

When the menu item information display unit 22 has received a request to display menu item information from any one of the restaurant terminals 3 or a computer that is used by a guest, the menu item information display unit 22 extracts the menu item information of the corresponding restaurant from the menu item information storage unit 21 and then displays the menu item information.

The menu item master storage unit 23 stores pieces of information required to generate a foreign-language menu in the respective master tables in the menu item information processing unit 20. The menu item master storage unit 23 includes the menu item category master storage unit 230, the menu item introduction master storage unit 231, the ingredient master storage unit 232, the seasoning master storage unit 233, the cooking style master storage unit 234, and the corresponding foreign-language term storage unit 235.

The menu item category master storage unit 230 stores information of categories that are choices to receive the input of a selected category of a food menu item by the menu item category input receiving unit 202. Categories are stored by hierarchical structure as described above. For example, categories are stored so as to be classified into a large classification, a middle classification narrower than the large classification, and a small classification further narrower than the middle classification. The large classification includes, for example, Japanese food, Italian food, French food, Spanish food, Chinese food, and the like. The middle classification includes, for example, sushi, seafood, teppan-yaki, izakaya, and the like, when the large classification is Japanese food. The small classification includes, for example, sashimi, seafood bowl, boiled fish, grilled fish, and the like, when the middle classification is seafood. In this way, the menu item category input receiving unit 202 is able to receive the input of a selected category by displaying choices on the basis of the categories stored in the menu item category master storage unit 230.

The menu item introduction master storage unit 231 stores the template information of a menu item introduction corresponding to the category selected by the menu item category input receiving unit 202. That is, each category and the template of a corresponding one of the menu item introductions are stored in association with each other. For example, the sentence "Sashimi (sashimi) is a Japanese food to eat it with a seasoning, such as soy sauce and vinegared miso, added with a condiment, such as horse radish and ginger, by cutting a raw ingredient, such as fish and shellfish, into small pieces." is stored as the template of the menu item introduction in association with the category "sashimi". Therefore, when the category "sashimi" has been selected, the menu item introduction processing unit 203 extracts the template information of the menu item introduction corresponding to "sashimi", stored in the menu item introduction master storage unit 231, and then displays the template information.

The ingredient master storage unit 232 stores information of ingredients that are choices to receive the input of a selected ingredient of a food menu item by the menu item property processing unit 204. Information of each ingredient may be stored in association with information of a category, or the menu item property processing unit 204 may extract an ingredient corresponding to the category selected by the menu item category input receiving unit 202 by consulting the ingredient master storage unit 232, and then display the extracted ingredient as the template information of the ingredient.

The seasoning master storage unit 233 stores information of seasonings that are choices to receive the input of a selected seasoning that is used in a food menu item by the menu item property processing unit 204. Information of each seasoning may be stored in association with information of a category, or the menu item property processing unit 204 may extract a seasoning corresponding to the category selected by the menu item category input receiving unit 202 by consulting the seasoning master storage unit 233, and then display the extracted seasoning as the template information of the seasoning.

The cooking style master storage unit 234 stores information of cooking styles that are choices to receive the input of a selected cooking style of a food menu item by the menu item property processing unit 204. Information of each cooking style may be stored in association with information of a category, or the menu item property processing unit 204 may extract a cooking style corresponding to the category selected by the menu item category input receiving unit 202 by consulting the cooking style master storage unit 234, and then display the extracted cooking style as the template information of the cooking style.

The ingredient master storage unit 232, the seasoning master storage unit 233, and the cooking style master storage unit 234 are collectively referred to as menu item property master storage unit.

The corresponding foreign-language term storage unit 235 is a correspondence table between Japanese (first language) and at least one foreign language (second language) for the category of a menu item to receive the input by the menu item category input receiving unit 202, the template information of an introduction to receive by the menu item introduction processing unit 203, the template information of the menu item properties, such as a representative ingredient, a cooking style and a seasoning, to receive by the menu item property processing unit 204, and the like.

### [Embodiment 1]

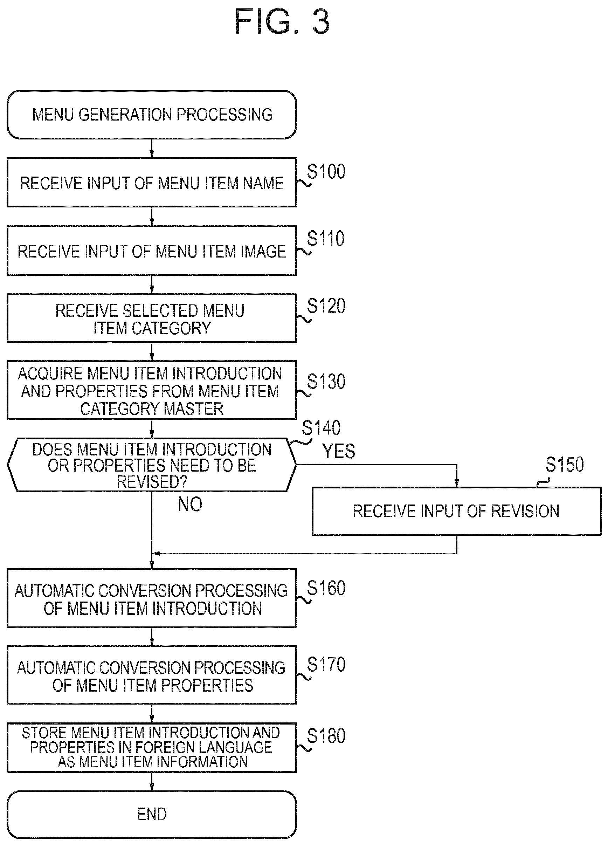

Next, an example of the processing process of the menu generation system 1 according to the invention will be described with reference to the flowchart shown in FIG. 3.

A restaurant that desires to display a foreign-language menu accesses to the menu generation system 1 of a company that manages an information providing service for restaurants through predetermined operation, and makes input operation for generating the foreign-language menu.

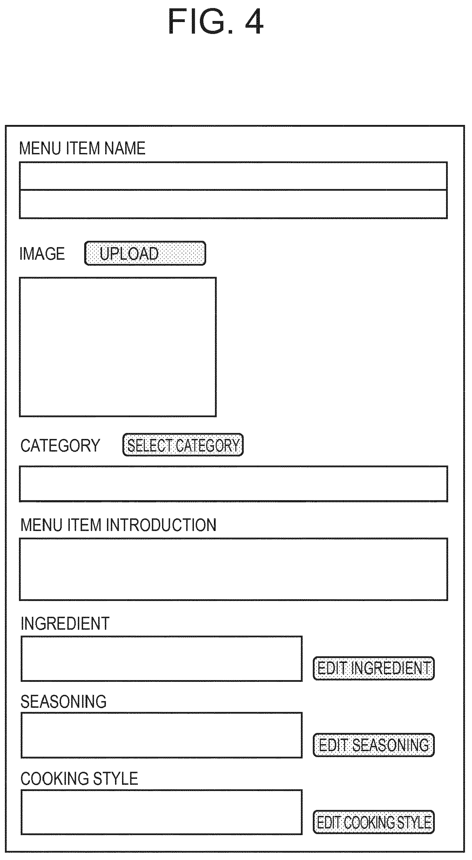

When the administrative server 2 receives the input operation, the menu item information processing unit 20 causes the corresponding restaurant terminal 3 to display a management window shown in FIG. 4, and prompts the input of menu item information on the restaurant terminal 3. Initially, the menu item name input receiving unit 200 of the menu item information processing unit 20 receives the input of a menu item name on the management window (S100). The menu item name input receiving unit 200 receives the input of a menu item name in Japanese and in katakana. The menu item name input receiving unit 200 performs conversion to Roman alphabet on the basis of the received katakana. Instead of the katakana, the menu item name input receiving unit 200 may receive the input of Roman alphabet. In this case, conversion from the menu item name in katakana to the menu item name in Roman alphabet is not required.

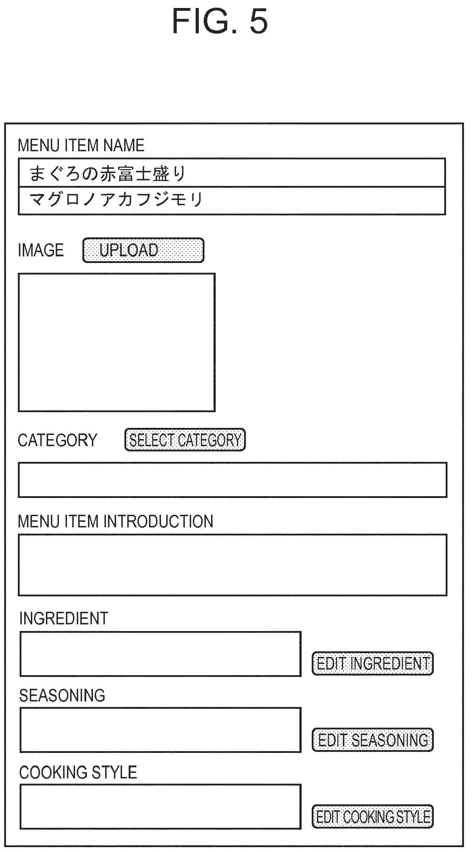

For example, when the menu item is "Maguronoakafujimori", the menu item name input receiving unit 200 receives " 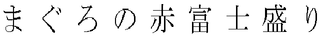 (Maguronoakafujimori in Japanese)" and " 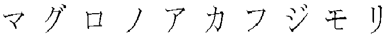 (Maguronoakafujimori in katakana)" as a menu item name. The menu item name input receiving unit 200 converts this to "MAGURONOAKAFUJIMORI" on the basis of " 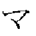 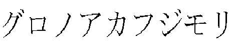 (Maguronoakafujimori in katakana)". FIG. 5 shows an example of the management window in the case where the menu item name is input.

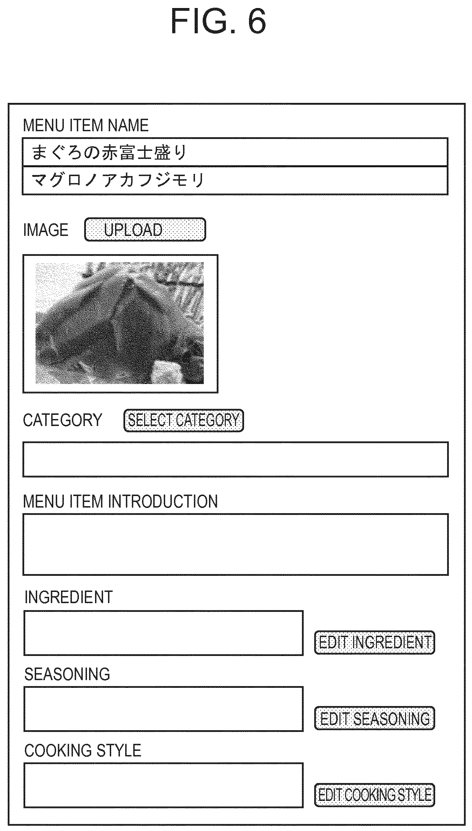

Subsequently, when "UPLOAD" button for uploading an image is selected in the management window, a window for uploading the image information of the menu item is displayed. Then, when image information to be uploaded is selected, the image information of the menu item is transmitted from the restaurant terminal 3 to the administrative server 2. The menu item image input receiving unit 201 of the menu item information processing unit 20 receives the input of the image information of the menu item (S110). FIG. 6 shows an example of the management window in the case where a menu item image is input.

When "SELECT CATEGORY" button is selected on the management window in the restaurant terminal 3, the menu item category input receiving unit 202 of the menu item information processing unit 20 receives the fact that "SELECT CATEGORY" button has been selected. The menu item category input receiving unit 202 consults the menu item category master storage unit 230 in the menu item master storage unit 23, and displays the choices of the menu item category on the management window. A manner of displaying choices includes various manners, such as a manner using a pull-down menu, a manner using checkboxes, and a manner using a pop-up window. Any manner may be employed.

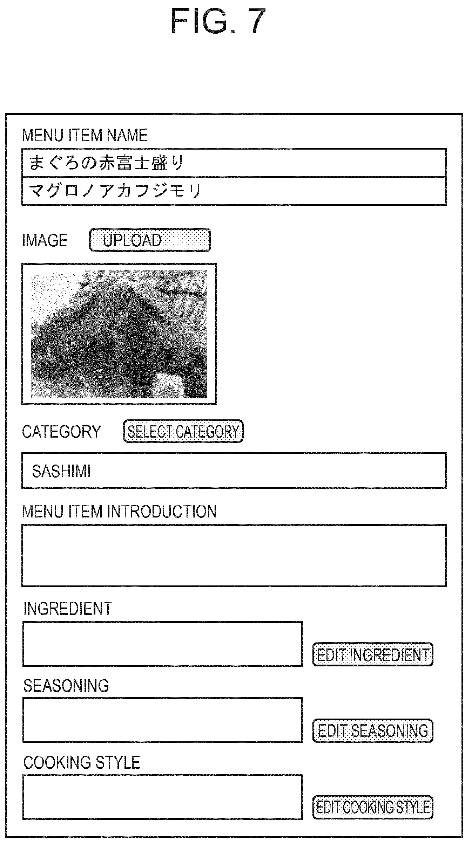

For example, if "sashimi" is selected within "seafood" (middle classification) of "Japanese food" (large classification), the menu item category input receiving unit 202 receives the input of the selection (S120). FIG. 7 shows an example of the management window in the case where a menu item category is input.

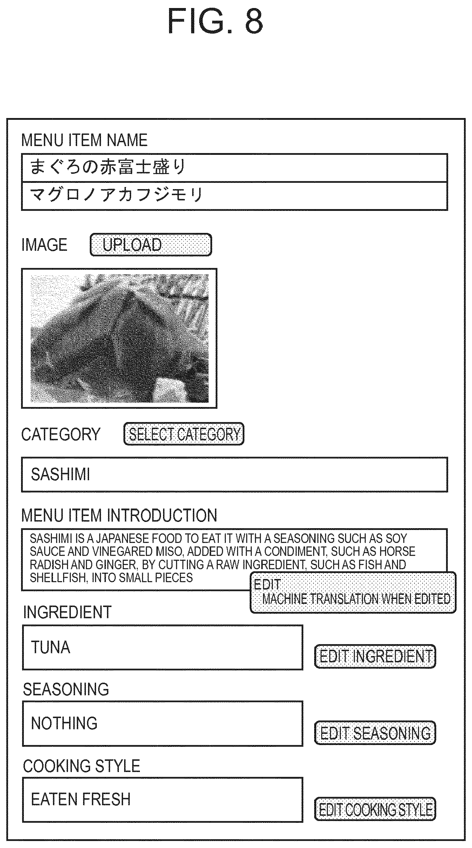

When the menu item category input receiving unit 202 receives a selected menu item category, the menu item introduction processing unit 203 and the menu item property processing unit 204 acquire the pieces of template information respectively corresponding to the menu item introduction and menu item properties, such as an ingredient, a seasoning and a cooking style, corresponding to the selected menu item category by consulting the menu item introduction master storage unit 231, the ingredient master storage unit 232, the seasoning master storage unit 233 and the cooking style master storage unit 234 in the menu item master storage unit 23 (S130). The menu item introduction processing unit 203 and the menu item property processing unit 204 display those pieces of template information on the management window. FIG. 8 shows an example of the management window in the case where the pieces of template information of the menu item introduction and menu item properties are displayed.

If the pieces of template information of the menu item introduction and menu item properties need to be revised (S140), edition is allowed by selecting "EDIT" in menu item introduction, "EDIT INGREDIENT", "EDIT SEASONING" or "EDIT COOKING STYLE", and the input is received (S150). At this time, the menu item introduction processing unit 203 receives free input of the menu item introduction in Japanese. On the other hand, as for the menu item properties, that is, the ingredient, seasoning and cooking style, when a selection of "EDIT INGREDIENT", "EDIT SEASONING", or "EDIT COOKING STYLE" is received, the menu item property processing unit 204 consults the ingredient master storage unit 232, the seasoning master storage unit 233 or the cooking style master storage unit 234 in the menu item master storage unit 23, displays corresponding choices on the management window, and then receives the input of a selected choice.

As described above, the input of the menu item name, menu item introduction, menu item properties, or the like, is received as menu item information. When the details are revised by the menu item introduction processing unit 203, the automatic translation unit 205 executes the process of automatically translating the Japanese menu item introduction received by the menu item introduction processing unit 203 into the menu item introduction in a predetermined foreign language, such as English, French, German, Spanish, Chinese and Arabic (S160). On the other hand, when no revision is made, the input information foreign-language word conversion unit 206 executes automatic conversion processing by consulting the corresponding foreign-language term storage unit 235 for a foreign-language term corresponding to the menu item introduction and identifying the foreign-language term of the selected menu item introduction (S160).

In addition, the input information foreign-language word conversion unit 206 executes automatic conversion processing by consulting the corresponding foreign-language term storage unit 235 on the basis of the selections received by the menu item property processing unit 204 and identifying foreign-language words of the selected menu item properties (S170).

By executing the above-described processing, the menu item information processing unit 20 stores in the menu item information storage unit 21 as the menu item information (S180).

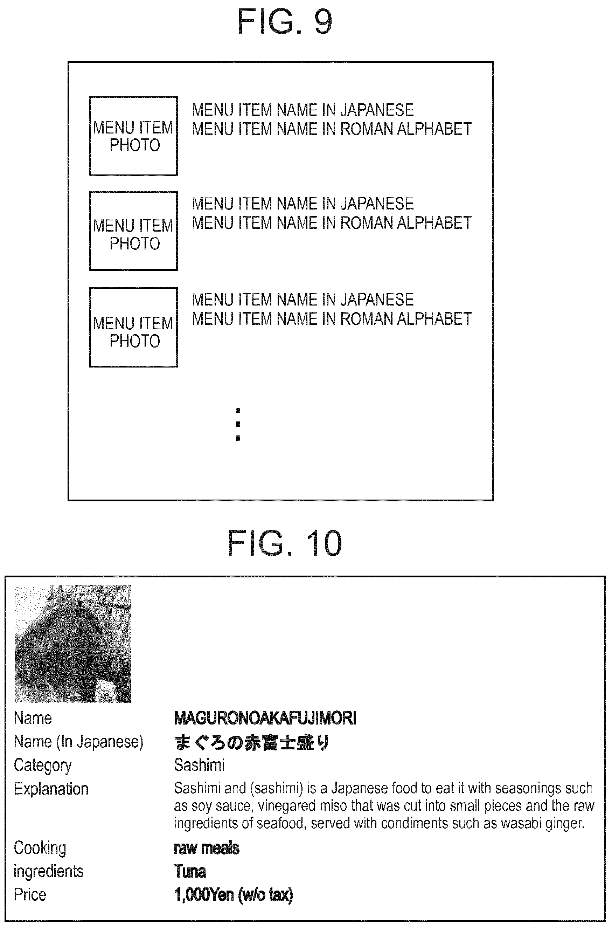

When a foreigner has actually come to a restaurant, a staff of the restaurant accesses to the administrative server 2 through predetermined operation with a portable communication terminal, or the like, and hands the portable communication terminal to the foreigner. As the foreigner selects his or her own understandable language, or the like, with the portable communication terminal, the menu item information display unit 22 displays a list of menu items as shown in FIG. 9. In this case, information of a menu item name in Japanese and in Roman alphabet and information of the photo of a menu item should be displayed in a list form.

When a menu item name, or the like, is selected from the list, the portable communication terminal issues a request to acquire the menu item information to the administrative server 2. The menu item information display unit 22 displays the menu item information of the selected menu, corresponding to the language selected by the foreigner, from the menu item information storage unit 21. The menu item information includes, for example, information of the menu item name in Japanese and in Roman alphabet, information of an introduction automatically converted or automatically translated from the menu item introduction in the selected language, information of a menu explanation automatically converted from menu item properties, such as an ingredient, a seasoning and a cooking style, in the selected language, and the like. FIG. 10 shows an example of this.

As described above, it is possible to provide a foreign-language menu by displaying the menu item information. The foreigner is allowed to directly order a desired menu item to the staff. In this case, because the menu item name is displayed in Roman alphabet that allows the foreigner to pronounce in Japanese and is not translated, the foreigner is allowed to order in Japanese pronunciation, and the staff is also able to listen to the order through pronunciation in Japanese. Therefore, it is less likely for a staff to erroneously listen to the details of an order.

Selected pieces of information are automatically converted, and the menu item properties shown in FIG. 10 are displayed in the selected language. Although a free expression is not allowed for each restaurant, menu item properties are allowed to be displayed by unified terms. Therefore, it is possible to provide information about an ingredient, a seasoning, a cooking style, and the like, to foreigners while keeping accuracy. Therefore, there is no writing that leads to ambiguity or misunderstanding, so it is possible to eliminate troubles, such as intake of ingredients that are subjects of taboos or restrictions due to religion, belief, health, or the like.

On the other hand, a menu item introduction allows free input at a restaurant, and the menu item introduction is allowed to be automatically translated. For this reason, room for conveying free feelings of a restaurant to a menu item is ensured. Therefore, it is also possible to keep ensuring the uniqueness of each restaurant.

The automatic translation processing of the automatic translation unit 205 or the automatic conversion processing of the input information foreign-language word conversion unit 206 may be not executed in advance but executed at any timing. For example, the processing may be executed when a foreigner has issued a request to display a corresponding menu item.

The input information foreign-language word conversion unit 206 may not display a foreign-language term corresponding to a selected menu item property. The input information foreign-language word conversion unit 206 may display foreign-language words corresponding to selectable menu item properties and then display a menu item property selected from among the menu item properties.

### [Embodiment 2]

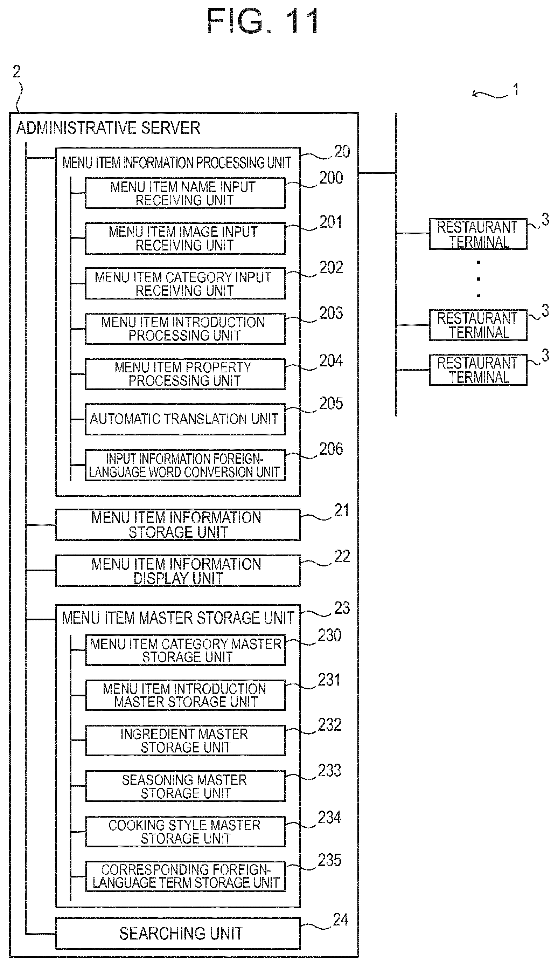

In a second embodiment different from the first embodiment, a web server that is used by a restaurant information providing site may be linked with the menu item information storage unit 21, and at least any one of a menu item name, a menu item introduction or a menu item property may be received as a searching condition for searching for restaurants or menu items in the restaurant information providing site. In this case, as schematically shown in FIG. 11, the administrative server 2 includes a searching unit 24. The input of a searching condition to the web server that is used by the restaurant information providing site may be carried out from any one of the restaurant terminals 3 or a computer that is used by a guest.

The searching unit 24 identifies a foreign-language word corresponding to a searching condition (first searching condition) from the corresponding foreign-language term storage unit 235 on the basis of at least any one of the menu item name, the menu item introduction or the menu item property in the searching condition. The searching condition is input to the restaurant information providing site. The searching unit 24 adds the identified term to the searching condition (second searching condition), searches the menu item information storage unit 21 for restaurants including those terms, and returns the results to the restaurant information providing site.

For example, when the restaurant information providing site receives the input of "pork" as the searching condition, the searching unit 24 identifies a foreign-language word corresponding to the searching condition "pork" input to the restaurant information providing site, that is, " 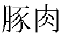 " (Japanese), " 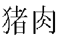 " (Chinese), "schwein" (German), "porc" (French), or the like, from the corresponding foreign-language term storage unit 235. The searching unit sets "pork", " 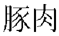 ", " 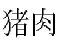 ", "schwein", or "porc" as a new searching condition, searches the menu item information storage unit 21 for restaurants including the term in the menu item information, and returns appropriate restaurants to the restaurant information providing site as search results.

In this case, the pieces of menu item information of the restaurants to be displayed as the search results should be displayed as pieces of information in the same language as the language of the searching condition input to the restaurant information providing site (first searching condition). That is, even when the pieces of menu item information of the found restaurants include not the searching condition "pork" but the searching condition " 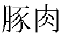 " (second searching condition), it is desirable that not the Japanese menu item information be displayed but the English menu item information be extracted from the menu item information storage unit 21 and then displayed.

By providing the searching unit 24, it is possible to provide information about restaurants that provide appropriate menu items to foreigners via the restaurant information providing site. Particularly, when there are ingredients, and the like, which are subjects of taboos or restrictions due to the reason of religion or belief, it is possible to select a restaurant that satisfies the guidelines, and the like.

### [Embodiment 3]

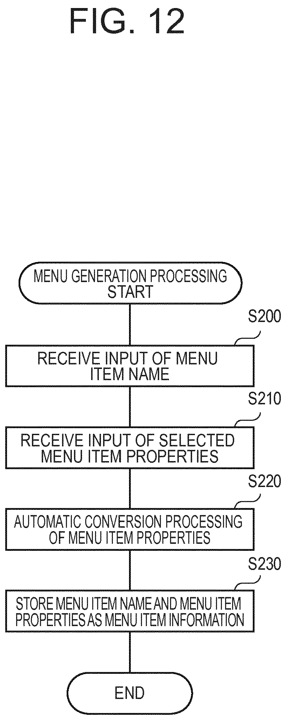

Here, another example of the processing process of the menu generation system 1 (see FIG. 3) will be described with reference to the flowchart shown in FIG. 12. More specifically, the processing process that will be described in Embodiment 3 is a simplified one compared to the processing process described in Embodiment 1 (see FIG. 3).

When the menu item information processing unit 20 receives predetermined operation via a restaurant terminal 3 as described above, the menu item information processing unit 20 causes a management window such as shown in FIG. 4 to be displayed and prompts the input of menu item information on the restaurant terminal 3. Here, it is conceivable that the menu item information processing unit 20 receives login operation of inputting a user ID and a password, or the like, which are set in advance for each restaurant, as the predetermined operation, at the start of the input of the menu item information on the restaurant terminal 3. Then, the menu item information processing unit 20 identifies a restaurant based on the user ID and the password input through the predetermined operation and user information with the user ID and the password stored, and allows the restaurant to log in. The menu item information processing unit 20 may receive the login operation before the input of the menu item name, the menu item properties, and the like, as described here, or the menu item information processing unit 20 may receive the login operation after the input of the menu item name, the menu item properties, and the like. For example, the menu item information processing unit 20 may receive the login operation at a timing before the menu item information is stored in the menu item information storage unit 21 in step S230, which will be described later.

When the management window is displayed, as shown in FIG. 12, in step S200, as in step S100, the menu item name input receiving unit 200 receives the input of a menu item name on the management window. Next, in step S210, the menu item property processing unit 204 receives the input of selected menu item properties in a first language from among the menu item properties stored in the menu item property master storage units such as the ingredient master storage unit 232, the seasoning master storage unit 233 and the cooking style master storage unit 234, individually. Here, the selected menu item properties input here may be one or two from among an ingredient, a seasoning and a cooking style.

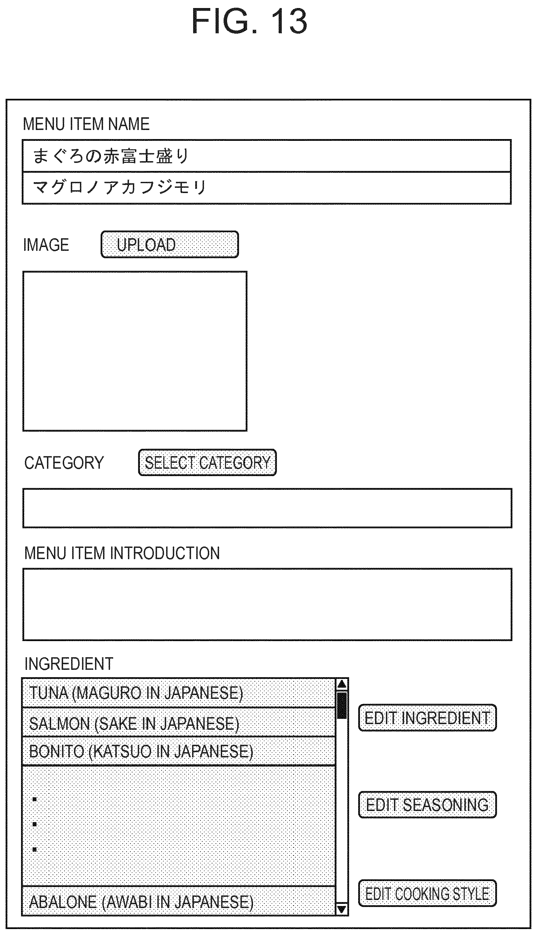

In the ingredient master storage unit 232, the seasoning master storage unit 233 and the cooking style master storage unit 234, ingredient IDs, seasoning IDs, cooking style IDs are assigned to ingredients, seasonings and cooking styles as identification information for identifying the ingredients, the seasonings and the cooking styles, respectively. Then, when operation for starting selection of an ingredient is performed on the management window, as shown in FIG. 13, the menu item property processing unit 204 causes respective ingredients stored in the ingredient master storage unit 232 to be displayed in the form of a list in ascending order or descending order according to the order of the ingredient IDs and receives operation of selecting an ingredient on the displayed list. Likewise, when operation for starting selection of a seasoning or a cooking style is performed on the management window, the menu item property processing unit 204 causes respective seasonings or cooking styles stored in the seasoning master storage unit 233 or the cooking style master storage unit 234 to be displayed in the form of a list in ascending order or descending order according to the order of the seasoning IDs or the cooking style IDs and receives operation of selecting a seasoning or a cooking style on the displayed list.

In step S210, as in step S130, the menu item property processing unit 204 may receive the input of a selected menu item category as the input of a selected menu item property. In this case, the menu item property processing unit 204 acquires menu item properties such as ingredients, seasonings or cooking styles, or the like, corresponding to the selected menu item category by consulting the ingredient master storage unit 232, the seasoning master storage unit 233 or the cooking style master storage unit 234, or the like, in the menu item master storage unit 23.

Then, in step S220, based on the selected menu item properties received by the menu item property processing unit 204 in step S210, the input information foreign-language word conversion unit 206 executes automatic conversion processing for converting the respective menu item properties into a foreign language (second language) by consulting the corresponding foreign-language term storage unit 235.

Subsequently, in step S230, the menu item information processing unit 20 stores the menu item name received in step S200 and the menu item properties converted into the second language in step S220, in the menu item information storage unit 21 as menu item information. More specifically, in step S230, the menu item information processing unit 20 stores the menu item name received in step S200 and the menu item properties converted into the second language in step S220, in the menu item information storage unit 21 as menu item information for the restaurant identified according to the login operation, in association with the restaurant.

Consequently, when an information terminal, which is a portable communication terminal, or the like, logs in to the administrative server 2 for any of the restaurants and then the second language is selected through predetermined operation on the information terminal, the menu item information display unit 22 of the administrative server 2 can cause a list of menu items (see FIG. 9) based on the menu item information associated with the restaurant to be displayed on the information terminal. Then, when a menu item name, or the like, is selected from the list of menu items on the information terminal, a request for acquiring the relevant menu item information is issued from the information terminal to the administrative server 2. Therefore, the menu item information display unit 22 reads information on the selected menu item name, or the like, from the menu item information storage unit 21 and causes the information to be displayed on the information terminal. More specifically, on the information terminal, as the menu item information, at least the menu item name in Japanese and Roman alphabet and the menu item properties, such as the ingredient, the seasoning and the cooking style, converted to the second language are displayed (see FIG. 10).

Although the menu generation processing has been described in terms of the case where the menu item information is stored in the menu item information storage unit 21 of the administrative server 2 in step S230, it is conceivable that in step S230, the menu item information is transmitted to the restaurant terminal 3 and stored in a storage unit of the restaurant terminal 3. In this case, the storage unit of the restaurant terminal 3 is an example of the menu item information storage unit.

As described above, in the menu generation system 1, it is conceivable that steps S200 to S230 are executed instead of steps S100 to S180. In other words, in the menu generation system 1, one or more of the menu item image input receiving unit 201, the menu item category input receiving unit 202, the menu item introduction processing unit 203 and the automatic translation unit 205 may be omitted.

### [Drafting function]

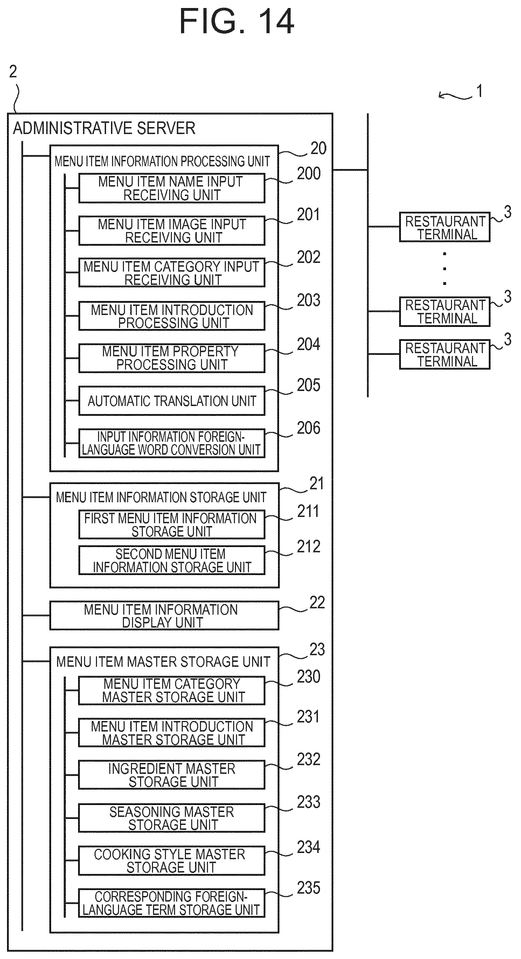

It is also conceivable that the menu generation system 1 includes a drafting function that allows menu item information stored in the menu item information storage unit 21 to be kept in a state in which the menu item information cannot be referred to by the information terminal. Here, FIG. 14 is a block diagram illustrating another example configuration of the menu generation system 1. The drafting function, the erroneous selection alerting function, the same menu item name alerting function, the confirmation screen displaying function or the wizard input function described below may be a function included in the menu generation system 1 according to the first embodiment or the second embodiment.

As shown in FIG. 14, it is conceivable that the menu item information storage unit 21 includes a first menu item information storage unit 211 to be consulted by the menu item information display unit 22, and a second menu item information storage unit 212 that temporarily stores the menu item information. Then, in the menu generation system 1, the menu item information processing unit 20 manages menu item information using the first menu item information storage unit 211 and the second menu item information storage unit 122. The first menu item information storage unit 211 and the second menu item information storage unit 212 may be storage units that are physically different from each other or may be storage areas that are different from each other in one storage unit.

More specifically, at the start of the processing process of the menu generation system 1, the menu item information processing unit 20 copies a menu item group including the pieces of menu item information for the restaurant identified through the login operation from the first menu item information storage unit 211 to the second menu item information storage unit 212. If there is no such menu item information for the restaurant, the copying processing is omitted.

Subsequently, the menu item information processing unit 20 receives the input of menu item information including a menu item name and menu item properties in response to user operation using the management window (S200, S210), converts the menu item properties into the second language (S220), and stores the menu item name and the menu item property converted into the second language in the second menu item information storage unit 212 as menu item information (S230). At this point of time, the menu item information display unit 22 cannot cause the menu item information to be displayed on the information terminal by consulting the second menu item information storage unit 212. On the other hand, the menu item information processing unit 20 can execute preview display processing for causing the menu item information stored in the second menu item information storage unit 212 to be displayed on the restaurant terminal 3 in response to preview request operation on a screen to which the menu item name is input or a screen to which the selected menu item properties are input, for example, the management window. At this time, it is conceivable that the content of the menu item information is the same as that of the format displayed by the menu item information display unit 22 when a request for acquiring the menu item information has been provided from a portable communication terminal to the administrative server 2 (see, for example, FIG. 10).

Then, when the user performs specific incorporation operation for determining the menu item information stored in the second menu item information storage unit 212, the menu item information processing unit 20 moves the menu item group including the pieces of menu item information stored in the second menu item information storage unit 212 to the first menu item information storage unit 211, stores the menu item group in the first menu item information storage unit 211 and deletes the menu item group from the second menu item information storage unit 212. If menu item information is stored in the first menu item information storage unit 211, the menu item information is overwritten with the menu item information stored in the second menu item information storage unit 212 and then stored in the first menu item information storage unit 211. Consequently, the menu item information display unit 22 subsequently can cause the updated menu item information to be displayed on the information terminal by consulting the first menu item information storage unit 211.

### [Erroneous selection alerting function]

In general, menu item names often include menu item properties such as ingredients, seasonings or cooking styles, or the like. For example, the menu item name "Maguronoakafujimori" includes the name of the ingredient "Maguro", which is a menu item property. Therefore, it is conceivable that if none of the menu item properties selected and input in step S210 is included in the menu item name input in step S200 and none of the menu item properties converted into the second language in step S220 is included in the menu item name input in step S200, the menu item information processing unit 20 causes a warning to that effect to be displayed on the restaurant terminal 3 to alert the user. Consequently, registration of erroneous menu item properties as the menu item properties of the menu item name is prevented. Then, if the user performs specific confirmation operation after the alerting, the menu item information processing unit 20 causes the menu item information to be stored in the menu item information storage unit 21 as it is.

### [Same menu item name alerting function]

Also, it is conceivable that if a menu item name that is the same as the menu item name input in step S200 is already stored in the menu item information storage unit 21 as the menu item information, the menu item information processing unit 20 causes a warning to that effect to be displayed on the restaurant terminal 3 to alert the user. More specifically, it is conceivable that when the restaurant has logged in using the restaurant terminal 3, if a menu item name that is the same as the menu item name input in step S200 is included in the menu item information already stored in the menu item information storage unit 21 in association with the restaurant that has currently logged in, the menu item information processing unit 20 causes a warning to that effect to be displayed on the restaurant terminal 3 to alert the user. Consequently, registration of a plurality of same menu item names is prevented. If the user performs confirmation operation after the alerting, the menu item information processing unit 20 can cause the menu item information to be stored in the menu item information storage unit 21 as it is. Also, it is conceivable that when the restaurant has logged in using the restaurant terminal 3, if a menu item name that is the same as the menu item name input in step S200 is included in the menu item information already stored in the menu item information storage unit 21 in association with a restaurant other than the restaurant that has currently logged in, the menu item information processing unit 20 incorporates the menu item properties stored in the menu item information into the management window. In this case, the administrative server 2 may be able to prohibit the menu item information for a user's own restaurant from being used for input of the menu item information by another restaurant, in response to the user operation on the restaurant terminal 3. It is also conceivable that the menu item information processing unit 20 issues a warming if a same piece of menu item information is repeatedly input.

### [Confirmation screen displaying function]

Also, it is conceivable that the menu item information processing unit 20 causes a confirmation screen for confirming the content of the menu item information to be displayed on the restaurant terminal 3 before the menu item information is stored in the menu item information storage unit 21 in step S230. In particular, it is conceivable that the content of the menu item information is displayed in the form displayed by the menu item information display unit 22 when a request for acquiring the menu item information is issued from a portable communication terminal to the administrative server 2 (see, for example, FIG. 10). Then, if specific confirmation operation is performed for the content of the menu item information, the menu item information processing unit 20 causes the menu item information to be stored in the menu item information storage unit 21.

### [Wizard input function]

Also, the menu item information processing unit 20 is not limited to one including the configuration that receives the menu item name and a plurality of pieces of information such as the menu item properties in response to user operation during one screen of the management window being displayed, in steps S200 and S210. For example, the menu item information processing unit 20 may receive the input of the menu item name and the plurality of menu item properties in a wizard format in which entry fields for sequentially inputting the menu item name and the plurality of menu item properties are sequentially displayed. Furthermore, it is conceivable that the menu item information processing unit 20 narrows down subsequent possible choices according to the pieces of information sequentially input in the wizard format. For example, in the wizard format, it is conceivable to input information in the order of a menu item name, an ingredient, a seasoning and a cooking style. In this case, it is conceivable that according to the input ingredient, selectable seasonings are limited to seasonings set in advance in association with the ingredient. Also, it is conceivable that according to a combination of the input ingredient and seasoning, selectable cooking styles are limited to cooking styles set in advance in association with the combination of the ingredient and seasoning.

With the menu generation system 1 according to the invention, even when there is no staff who has a good command of a foreign language, it is possible to make a foreigner understand a menu item with a simple method. Because it is possible to accurately display an ingredient, a cooking style, and the like, on a menu, it is less likely to have a trouble with a guest. In addition, because a menu item name is displayed in writing that allows even a foreigner to pronounce the menu item name in the first language, it is less likely to make a wrong order.

## Claims

1. A menu generation system (1) that generates a menu of a restaurant in multiple languages, **characterized by** comprising:
a menu item information storage unit (21) that stores menu item information;
a menu item property master storage unit (232, 233, 234) that stores menu item properties including at least any of a plurality of ingredients that are used in menu items, a plurality of seasonings that are used in the menu items and a plurality of cooking styles of the menu items;
a menu item name input receiving unit (200) that receives input of a menu item name;
a menu item property processing unit (204) that receives input of a selected menu item property in a first language from among the menu item properties stored in the menu item property master storage unit (232, 233, 234);
a corresponding foreign-language term storage unit (235) that stores a correspondence relation between the menu item properties in the first language and the menu item properties in a second language;
an input information foreign-language word conversion unit (206) that converts the received menu item property in the first language to the menu item property in the second language on the basis of the correspondence relation stored in the corresponding foreign-language term storage unit (235);
a menu item information processing unit (20) that after receiving login operation for identifying a restaurant, stores the received menu item name and the converted menu item property in the second language in the menu item information storage unit (21) as menu item information for the restaurant identified according to the login operation; and
a menu item information display unit (22) that in response to a request to display a menu item from an information terminal, consults the menu item information storage unit (21) and displays menu item information including the menu item name and the converted menu item property in the second language, on the information terminal.

2. The menu generation system (1) according to claim 1, further comprising a menu item category input receiving unit (202) that receives input of a selected menu item category, wherein
the menu item property master storage unit (232, 233, 234) stores menu item categories associated with the menu item properties, in addition to the menu item properties, and
the menu item property processing unit (204) extracts a menu item property corresponding to the received menu item category from the menu item property master storage unit (232, 233, 234), and receives the extracted menu item property as input of the menu item property in the first language.

3. The menu generation system (1) according to claim 2, further comprising:
a menu item introduction master storage unit (231) that stores the menu item categories and menu item introductions in the first language in association with each other; and
a menu item introduction processing unit (203) that extracts a menu item introduction corresponding to the received menu item category from the menu item introduction master storage unit (231), and receives the extracted menu item introduction as the menu item introduction in the first language, wherein
the corresponding foreign-language term storage unit (235) stores a correspondence relation between the menu item introductions in the first language and the menu item introductions in the second language, in addition to the menu item properties,
the input information foreign-language word conversion unit (206) converts the received menu item introduction in the first language to the menu item introduction in the second language on the basis of the correspondence relations stored in the corresponding foreign-language term storage unit (235), and
the menu item information processing unit (20) stores in the menu item information storage unit (21) as the menu item information, the converted menu item introduction in the second language as well as the menu item property.

4. The menu generation system (1) according to any of claims 1 to 3, wherein the menu item information processing unit (20) is able to receive the login operation performed before or after the input of the menu item name and the menu item property.

5. The menu generation system (1) according to any of claims 1 to 4, wherein the menu item property processing unit (204) causes the menu item properties stored in the menu item property master storage unit (232, 233, 234) to be displayed in a form of a list according to pieces of identification information assigned in advance to the respective menu item properties and receives operation of selecting a menu item property from among the menu item properties displayed in the form of the list.

6. The menu generation system (1) according to any of claims 1 to 5, wherein
the menu item information storage unit (21) includes a first menu item information storage unit (211) to be consulted by the menu item information display unit (22) and a second menu item information storage unit (212) that temporarily stores the menu item information, and
after the menu item information is stored in the second menu item information storage unit (212), the menu item information processing unit (20) stores the menu item information stored in the second menu item information storage unit (212), in the first menu item information storage unit (211) in response to specific incorporation operation and deletes the menu item information from the second menu item information storage unit (212).

7. The menu generation system (1) according to any of claims 1 to 6, wherein if a menu item name that is the same as the received menu item name is already stored in the menu item information storage unit (21), the menu item information processing unit (20) issues a warning.

8. The menu generation system (1) according to any of claims 1 to 7, wherein if specific confirmation operation is performed after the menu item information is displayed before the menu item information is stored in the menu item information storage unit (21),
the menu item information processing unit (20) stores the menu item information in the menu item information storage unit (21).

9. The menu generation system (1) according to any of claims 1 to 8, wherein the menu item information processing unit (20) causes the input menu item name and the converted menu item property in the second language to be displayed in response to preview request operation on a screen to which the menu item name is input or a screen to which the selected menu item property is input.

10. The menu generation system (1) according to any of claims 1 to 9, wherein if
the menu item property received by the menu item property processing unit (204) is not included in the menu item name and the converted menu item property in the second language is not included in the menu item name, the menu item information processing unit (20) issues a warning.
